# EUROPÄISCHE PATENTSCHRIFT

(11) **EP 0 936 204 B1**
(45) Veröffentlichungstag und Bekanntmachung des Hinweises auf die Patenterteilung: **07.08.2002**
(21) Anmeldenummer: 99102575.0
(22) Anmeldetag: 11.02.1999
(51) Int. Cl.: C05F 17/00, C05D 3/02, C05D 5/00, C05D 9/00, C05F 9/04

(54) **Verfahren zur Herstellung von Kompost enthaltenden Düngesubstraten**
Method of producing compost fertiliser substrates
Procédé de fabrication des substrates d'engrais á base de compost

(30) Priorität: 14.02.1998 DE 19806087
(43) Veröffentlichungstag der Anmeldung: 18.08.1999
(73) Patentinhaber: Schmidt GmbH & Co. KG Biokompost Sachsen, 09661 Tiefenbach (DE)
(72) Erfinder: Schmidt, Gerald, 09648 Mittweida (DE); Schneider, Rudolf, 01594 Stauchitz (DE)
(74) Vertreter: Hofmann, Klaus

(56) Entgegenhaltungen:
- DE-A- 3 409 019
- DE-A- 3 923 641
- DE-A- 4 342 915
- DE-A- 4 440 649
- DE-A- 19 534 874
- DE-A- 19 544 951
- US-A- 3 877 920
- GRUNDLAGE DER KOMPOSTIERUNG; Verfahrenskonzepte der Bioabfallkompostierung; Seite 327-337. Fricke K., Turk, T, Vogtmann, H. DE, Berlin, EF Verlag, 1990.

## Beschreibung

Die Erfindung betrifft ein Verfahren zur Herstellung von Düngesubstraten zur Bodenverbesserung und Nährstoffversorgung, Stabilisierung der Bodenfruchtbarkeit, Unterbindung von Auswaschungen umweltunverträglicher Substanzen, wie Stickstoffverbindungen, Schwermetalle und Bindung übelriechender, ekelerregender Spaltprodukte und deren Aromate, sowie die Eliminierung von Lockstoffen für Schadinsekten aus unvergorener Gülle aus der Tierhaltung, unvergorenen Fäkalien, unvergorenen Kot- und Harngemischen aus dem menschlichen und tierischen Lebensbereich, unvergorenen organischen Substanzen und Abfällen der kommunalen Wirtschaft.

In DE 41 23 798 C1 ist ein Verfahren zur ammoniakemissionsfreien Herstellung von Humus aus beispielsweise Gülle beschrieben, wobei den Abfallstoffen zerkleinertes Stroh und Sägemehl zugegeben werden.

Aus DE 41 39 682 A1 ist ein Verfahren zur Reduzierung oder Vermeidung von Ammoniak-Emissionen aus güllehaltigen Komposten bekannt, bei dem silierte Biomasse zugegeben wird.

Ein weiteres Verfahren zur Entsorgung von Gülle ist in DE 39 07 751 C1 beschrieben. Dabei wird die Gülle zusammen mit kompostierbaren Feststoffen in ein Mischgerät geführt, innig vermischt und die anfallende Masse einer Kompostierwanne zugeführt, in der der Masse Sauerstoff zugeführt wird.

Das in DE-A-3923641 beschriebene Verfahren zeigt eine geschlossene Reaktorkompostierung. Bei dem beschriebenen Verfahren durchlaufen die organischen Abfälle in einem einzigen Reaktor von oben nach unten verschiedene Zonen der Vor-, Haupt- und Nachrotte. Zwischen den einzelnen Rottephasen erfolgt keine Umsetzung. Vielmehr erfolgt ein Abzug der Abluft aus der Vor- und Hauptrotte nach unten, ein anschließendes Entwässern dieser Abluft und eine Rückführung der aus der Abluft entzogenen Feuchtigkeit.

In DE-A-3409019 wird eine genau definierte Mischung aus verschiedenen Gesteinsmehlen, Mist, Algen und Kräutern als Präparat dem Kompost zwecks Zuführung von Mineralstoffen und Spurenelementen vor dem mietenmäßigen Aufsetzen zugegeben.

Zuschlagstoffe zur Verhinderung von Geruchsemissionen werden beispielsweise auch in DE-A-4440649, DE-A-19534874, DE-A-19544951 oder US-A-3877920 zugegeben.

Den bekannten Verfahren zur Herstellung von Düngesubstraten, bei denen Gülle oder Fäkalien als Ausgangsstoffe verwendet werden, haftet der Nachteil an, daß die Bereitsteilung einer hohen und teuren Bausubstanz oder der Zwang eines hohen apparatetechnischen Aufwandes für Ausrüstungen mit großem Materialaufwand, wie es beispielsweise aus der geschlossenen Druckkompostierung bekannt ist, erforderlich ist. Die Beseitigung der angeführten Ausgangsstoffe gipfelt schließlich in der Erstellung riesiger Verbrennungsanlagen, deren Endprodukt man als mineralischen Dünger einsetzen möchte.

Aufgabe dieses Verfahren ist es, unvergorene Gülle aus Tierhaltungsanlagen, unvergorene Fäkalien aus dem menschlichen Lebensbereich, unvergorene organische Substanzen aus der kommunalen Wirtschaft, nach dem natürlichen Kompostierungsprozeß, verbunden mit dem daraus resultierenden Stoffumwandlungsprozeß, unter Eliminierung der ekelerregenden Aromate, Gerüche und Lockstoffe für Schadinsekten, bodenverbessernd, umweltschonend, düngend, dem natürlichen Wirtschaftskreislauf der Natur zuzuführen und ein hygienisch unbedenkliches, mit hohem Reinheitsgrad ausgestattetes Düngesubstrat mit geringem Arbeits-, Material- und Finanzaufwand herzustellen. Dabei wird aus dem mit vielen Umweltrisiken verbundenen Abfallstoff ein hocheffizientes Düngesubstrat. Dieses soll sich insbesondere durch hohe Qualitätsstabilität und konstante Zusammensetzung auszeichnen.

Erfindungsgemäß wird die Aufgabe dadurch gelöst, daß unvergorener Gülle aus der Tierhaltung, unvergorenen Fäkalien, unvergorenen Kot- und Harngemischen aus dem menschlichen und tierischen Lebensbereich, unvergorenen organischen Substanzen und Abfällen der kommunalen Wirtschaft, **alle mit einer Strukturgröße von 0-10 mm,** eine Mischung von Gesteinsmehl und/oder Tonmineralien mit Magnesiumkarbonat und/oder MagnesiumbiKarbonat mit einer Korngröße von kleiner als 90 µm zugesetzt wird. Als besonders vorteilhaft hat sich die Zugabe von Aluminiumsilikathydrat AL₄(OH)₈Si₄O₁₀ erwiesen. Um ein Düngesubstrat einer Charge mit homogenen Eigenschaften zu erhalten, sollte das Ausgangsmaterial nur aus einer Anlage oder einem Herkunftsort kommen.

Erfolgt die Zugabe der Gesteinsmehle oder Tonmineralien bereits auf die Spaltböden in den Stallanlagen, so wird das Material durch die laufende Trittbewegung der Tiere innigst mit dem Kot und Harn vermischt. Durch die Wirksamkeit des Absorptions- bzw. Adsorptionseffektes, verbunden mit der hohen Affinität und Adhäsion der zugegebenen Materialien, ihrer physikalischen Bindungsmöglichkeiten und der Möglichkeit, eine lockere chemische Reaktion einzugehen, kommt es zur Eliminierung der Aromastoffe, der Geruchsbindung und der Festlegung der Schadstoffe. Der folgende Stoffumwandlungs- und Mineralisierungsprozeß wird in umweltfreundliche Bahnen geleitet und verliert die negativen Begleiterscheinungen der bekannten Vorgänge.

Die Zugabe der Zuschlagstoffe kann auch in die Güllestaukanäle oder -vorratsbehälter oder erst bei einer weiteren Verarbeitung des Ausgangsmaterials erfolgen.

Das Ausgangsstoff-Tonmineral-Gemisch wird anschließend durch Separieren bis auf einen Trockenmassegehalt zwischen 30 bis 60 Gew% gebracht. Falls Zellstrukturen der Ausgangsstoffe noch nicht durch bakterielle oder enzymatische Prozesse aufgeschlossen oder zumindest angegriffen sind, was beispielsweise bereits bei der Verdauung im Tiermagen geschehen kann, dann werden die Zellen durch mechanisches Mahlen und Quetschen zusätzlich behandelt und somit aufgeschlossen. Dies kann gleichzeitig bei der Separierung, beispielsweise mit Preßschneckenseparatoren, erfolgen.

Überraschenderweise wurde gefunden, daß die Zugabe der erwähnten Zuschlagstoffe die natürliche Kompostierung und damit den Stoffumwandlungsprozeß fördert und die Bindung von Geruchs- und Aromastoffen günstig beeinflußt.

Die separierte feste Phase des Ausgangsmaterials wird blasend in leicht zu belüftenden Mieten möglichst lose aufgeschüttet. Dieser Arbeitsvorgang ist die Voraussetzung, damit der aerobe Mineralisierungsprozeß als Vorstufe einer Stoffumwandlung beginnen kann.

Es entsteht ein qualitätsstabiles, in seiner Zusammensetzung konstantes, hocheffizientes Düngesubstrat. Hier liegt ein entscheidender Unterschied zu bekannten Komposten, wobei besonders zu beachten ist, daß das Endprodukt im Rahmen des Stoffumwandlungsprozesses, durch seine in der natürlichen Kompostierung erreichte bakteriologische Lebendverbauung der Partikelchen keiner Auswaschung mehr unterliegt, und schwermetallbindend in Erscheinung tritt.

Nachfolgend wird die Erfindung an einem Ausführungsbeispiel näher erläutert.

In einem Rinderstall mit etwa 500 Tieren fallen jährlich ca. 5000 m³ Rindergülle an. Die Gülle sammelt sich in den Staukanälen und fließt den Sammelbecken zu. **Mittels Dosiergeräten werden 400 g Aluminiumsilikathydrat AL**_{**4**}**(OH)**_{**8**}**Si**_{**4**}**O**_{**10**} **mit einer Korngröße kleiner als 90 µm pro m**^{**3**} **beigemischt. Eine weitere Zuführung von 10 g hochprozentigen Magnesiumkarbonat MgCo**_{**3**} **pro m**^{**3**} **in derselben Korngröße aktiviert den Bindungsprozeß der ekelerregenden Gerüche und Aromate.** Mit Hilfe von Dickflüssigkeitspumpen wird die Gülle Preßschneckenseparatoren zu geführt, die den flüssigen Teil dieser Masse von den festen Teilen trennen und, einstellbar durch den Preßdruck, bei den festen Teilen die gewünschte Trockenmasse von 30 bis 60 Gew.% herbeiführen.

Die Zuschlagsstoffe können auch bei dem Trennungsprozeß der festen und flüssigen Phase des zu kompostierenden und für den Stoffumwandungsprozeß vorgesehen Materials zugeführt werden. Das Zuführen hat dann in das Innere des Preßkorbes des Separators zu geschehen. Die drehende, pressende, vorwärtstreibende Tätigkeit der Preßschnecke, die auch das Material immer wieder sich überschlagen läßt, führt zur innigen Vermischung und begünstigt die Wirkungsweise zur Geruchsbindung mit den nun bereits festen Bestandteil des Ausgangsmaterials.

Das mit einer Trockenmasse von 30 bis 60 Gew.% erzeugte Ausgangsmaterial, das einer natürlichen Kompostierung und dem Stoffumwandlungsprozeß zugeführt werden soll, wird mietenmäßig in einer Höhe von 1,50 m locker blasend angesetzt. Die Breite der Miete wird durch deren Schüttkegel bestimmt. Um diesen Arbeitsvorgang auszuführen, bedient man sich einer für diesen Zweck vorgerichteten Schneefräse. Mit dieser Methode wird eine optimale Sauerstoffumspülung, selbst der kleinsten Partikelchen des Materials erreicht. Durch Einstechen von Belüftungskanälen in Bodennähe der Mieten wird eine natürliche kontinuierliche, selbständig wirkende Belüftung erreicht. Die Kanäle kann man auch zu einer Zwangsbelüftung verwenden. Dadurch herrschen für die aeroben Bakterienkulturen optimale Lebensbedingungen, die für diesen Prozeß notwendig sind, um den Stoffumwandlungsprozeß, verbunden mit der Geruchs- und Aromatenbindung, einzuleiten. Diese Methode unterbindet gleichzeitig ein Umkippen des Rottezustandes in einen Fäulniszustand der Miete.

Aerobe Bakterienkulturen leiten den Vorgang des Stoffumwandlungsprozeß mit seiner Geruchs- und Aromatenbindung des Ausgangsmaterials ein. Es wird eine Temperatur bis 75°C erreicht. Nach ca. 5 bis 10 Tagen ist die Nahrungsgrundlage und Nahrungszufuhr für die aeroben Bakterienkulturen aufgebraucht, die Temperatur in den aufgesetzen Mieten sinkt auf ca. 50 Grad ab. Die erste Phase als Vorstufe der natürlichen Kompostierung dieses Stoffumwandlungsprozeß gilt damit als abgeschlossen.

Nach Erreichen dieses Zustandes erfolgt ein weiteres blasendes, belüftendes Umsetzen mit der für diesen Zweck umgerüsteten Schneefräse, um die zweite, die Verpilzungsphase, einzuleiten. In und auf der Miete siedeln sich die unterschiedliche Arten der Hut- und Schimmelpilze sichtbar an und scheiden im Rahmen ihres Wachstums antibiotische Substanzen aus, die pathogene Keime abtöten. Das dunkle Erscheinungsbild der Miete in der ersten Phase wird durch einen sichtbaren Grauschleier abgelöst. Der aerob bakterientypische Geruch wird abgelöst und durch einen Geruch der an verpilzte Walderde erinnert, ersetzt.

Das Umsetzen und Belüften der Mieten mit der für diesen Zweck umgerüsteten Schneefräse hat den Vorteil, daß das Material für diesen Zweck selbsttätig aufgenommen, gut durchmischt, erneut zerkleinert, intensiv sauerstoffumspült, nicht klumpenbildend wieder mietenmäßig angesetzt werden kann.

Während der zweiten Phase werden vor allen Dingen die Stickstoffverbindungen wie Ammoniak gebunden, damit sie nicht mehr durch ihre vorherige Wasserlöslichkeit der Auswaschung unterliegen. Der Ammoniak unterliegt nicht mehr dem Nitrifizierungsprozeß, damit entfällt die Nitratanreicherung des Grundwassers. Reste von Holzstoffen und Lignine des Strohes die sich in diesen Material befinden werden durch die Schimmelpilze aufgeschlossen. Dieser Vorgang ist abhängig von der Außentemperatur und Luftfeuchtigkeit. Er vollzieht sich aber auch bei Minustemperaturen. Innerhalb von 10 bis 14 Tagen ist er abgeschlossen.

Nach dem sichtbaren Zusammenfallen der Hutpilze auf der Miete und dem Abwelken der Schimmelpilze im Inneren der Miete wird die dritte Phase eingeleitet. Dies erfolgt wiederum mit der beschriebenen Maschine, wobei besonders wichtig ist, daß die mit dem Schimmel- und Hutpilzungsprozeß verbundene Verklumpung und Verfilzung wieder zerfasert und zerkleinert wird, damit das Material, vorgesehen für diesen Stoffumwandlunsprozeß bis in das kleinste Partikelchen blasend und damit wieder sauerstoffumspült angesetzt werden kann. Das durch die bakteriologischen Umsetzungsvorgänge und durch die Verpilzung in den ersten 2 Phasen in seinen Gefüge stark angegriffene und aufgeschlossene Material tritt mürbe, nach Abschluß dieser Phase mikrobiell lebend verbaut und leicht fließend in Erscheinung. Es kommt noch einmal zu einer leichten Erwärmung, die nach 3 bis 4 Tagen abklingt.

Die dritte Phase dieses Vorganges kann auch als mikrobiell lebend verbauende Konservierungsphase des nunmehr abgeschlossenen Stoffumwandlunsprozeß betrachtet werden. Das Material zeichnet sich durch seine Mürbe, Feuchte, auch in diesen Zustand leicht fließende, krümelige, lebendverbauende Krümelstuktur aus. Das Material ist geruchsneutral, erinnert aber an Walderde, ist seuchenhygienisch unbedenklich, besitzt einen hohen Reinheitsgrad im Hinblick auf austriebsfähige Samen-und Pflanzenteile, andere wachstumsschädigende Substanzen und pathogene Keime. Es entspricht den nationalen und internationalen Gütebestimmung dieser Materialien. Selbstverständlich greifen alle 3 Vorgänge teilweise ineinander über, sind aber klar und deutlich visuell voneinander zu unterscheiden.

## Patentansprüche

1. Verfahren zur Herstellung von Düngesubstraten aus unvergorenen menschlichen oder tierischen Fäkalien oder unvergorenen organischen Abfällen der kommunalen Wirtschaft, alle mit einer Strukturgröße von 0-10mm mit folgenden Merkmalen:
- das Gefüge der Ausgangsstoffe wird durch eine mechanische, enzymatische oder bakterielle Vorbehandlung aufgeschlossen
- es wird eine Mischung von Gesteinsmehle und/oder Tonmineralien mit Magnesiumkarbonat und/oder Magnesiumbikarbonat mit einer Korngröße kleiner als 90 µm. zugesetzt,anschließend vermischt und auf einen Trockenmassegehalt von 30 bis 60 Gew.% entwässert,
- anschließend erfolgt eine lose mietenmäßige Ansetzung unter blasender Belüftung,
- wobei die Kompostmieten nach jeweils einer ersten aeroben Phase, einer anschließenden Verpilzungsphase und einer abschließenden aeroben bakteriellen Stabilisierungsphase unter blasender Belüftung umgesetzt werden.

2. Verfahren nach Anspruch 1, **dadurch gekennzeichnet, daß** als Ausgangsstoff Rindergülle verwendet wird.

3. Verfahren nach den Ansprüchen 1 und 2, **dadurch gekennzeichnet, daß** als Tonmineral Aluminiumsilikathydrat (AL₄(OH)₈Si₄O₁₀) verwendet wird.

## Claims

1. Process for the production of fertilizer substrates from unfermented human or animal faeces or unfermented organic municipal waste, all with a structure size of 0-10 mm, with the following features:
- the structure of the starting material is broken down by mechanical, enzymatic or bacterial pretreatment,
- a mixture of rock meal and/or clay minerals with magnesium carbonate and/or magnesium bicarbonate with a particle size of less than 90 µm is added, the product is subsequently mixed and dehydrated to a dry matter content of 30 to 60% by weight,
- the mixture is then laid down loosely as a clump, with blowing aeration,
- the compost clumps being turned after in each case a first aerobic phase, a subsequent fungal development phase and a final aerobic bacterial stabilization phase, with blowing aeration.

2. Process according to Claim 1, **characterized in that** liquid cattle manure is used as starting material.

3. Method according to Claims 1 and 2, **characterized in that** aluminium silicate hydrate (Al₄(OH)₈Si₄O₁₀) is used as clay mineral.

## Revendications

1. Procédé de fabrication de substrats d'engrais à partir de matières fécales humaines ou animales non fermentées ou de déchets organiques non fermentés de la gestion municipale, ayant tous une grosseur de structure de 0-10 mm, avec les caractéristiques suivantes:
- le réseau des substances de départ est aéré par un traitement préalable mécanique, enzymatique ou bactérien,
- l'on ajoute un mélange de roches pulvérisées et/ou de minéraux argileux à du carbonate de magnésium et/ou à du bicarbonate de magnésium ayant une grosseur de grain inférieure à 90 µm, l'on mélange ensuite et l'on déshydrate à une teneur à sec de 30 à 60% en poids,
- il se produit ensuite une préparation en vrac en forme de meule sous ventilation par insufflation,
- les meules du compost, entrant en réaction sous ventilation par insufflation, après, à chaque fois, une première phase aérobie, une phase subséquente de traitement aux champignons et une phase finale de stabilisation aérobie bactérienne.

2. Procédé selon la revendication 1, **caractérisé en ce que** l'on utilise en tant que substance de départ du purin de bovins.

3. Procédé selon les revendications 1 et 2, **caractérisé en ce que** l'on utilise, en tant que minéral argileux, l'hydrate de silicate d'aluminium (Al₄(OH)₈Si₄O₁₀).
